# EUROPEAN PATENT SPECIFICATION

(11) **EP 1 800 841 B1**
(45) Date of publication and mention of the grant of the patent: **20.08.2008**
(21) Application number: 05112455.0
(22) Date of filing: 20.12.2005
(51) Int. Cl.: B29C 70/34, B29D 31/00, B29C 70/46

(54) **A stiffening element and a method for manufacturing of a stiffening element**
Versteifungselement und Verfahren zu dessen Herstellung
Raidisseur et procédé pour sa fabrication

(43) Date of publication of application: 27.06.2007
(73) Proprietor: SAAB AB, 581 88 Linköping (SE)
(72) Inventor: PETERSSON, Mikael, 585 90, LINKÖPING (SE); WEIDMANN, Björn, 590 31, BORENSBERG (SE)
(74) Representative: Winblad, Hans Peter

(56) References cited:
- EP-A- 1 151 850

## Description

### FIELD OF THE INVENTION

The present invention relates to a method for manufacturing of a stiffening element of composite material according to the pre-characterising part of claim 1, and to a stiffening element of composite material according to the pre-characterising part of claim 6. The present invention relates, but not limited, to aircraft industry.

### BACKGROUND OF THE INVENTION

Methods of manufacture of composite materials using "prepreg" material (layer of fibre material previously impregnated with resin) exist today. When manufacture of stiffening elements, such as aircraft ribs, frames etc., the composite material may have a curvature following a single curved or a double curved shell surface of a fuselage. It is today time-consuming to form an aircraft rib of composite material. Manual work for application of prepreg material is required since it is difficult to provide that the fibre material follows the curvature. Especially C-shaped aircraft ribs of composite material are difficult to manufacture since the fibre material tend to not follow the curvature.

EP 1 547 756 discloses a method of manufacturing C-shaped spars providing one type of fibre material being held in uncured resin material and a second type of fibre material not fully consolidated with resin material. The method disclosed in EP 1 547 756 may enable manufacturing times and costs to be reduced, but involves a complicated procedure and usage of fibre material to achieve the composite material structures.

EP 1 151 850 discloses a method for manufacturing of a stiffening element of a blank of composite material in accordance with the preambles of claims 1 and 6 respectively, the stiffening element having a web and a curved flange. The formed blank is cured into the finished article. The method is divided into three processes wherein the third process includes that an edge portion of the element shaped intermediate is heated under pressure to form a joggle.

The object of the present invention is to overcome the drawbacks of known techniques and to provide a solution alternative to hand preparation of composite material, such as aircraft ribs, spars etc., which solution also implies a minimum of material spillage during manufacturing.

### SUMMARY OF THE INVENTION

This has been solved by a method being defined in the introduction, the method is characterised by the steps claimed in claim 1.

Thereby an essentially flat blank of composite material layers having a rectangular continuous extension can be used in a cost effective manner. The production of composite material having a curvature following the curvature of a single curved shell surface is thus simplified, that is, composite material in for example aircraft ribs. Since all composite material (such as plastic) is used in the process and since the fibre orientation optimally can be utilized weight is saved. The plastic material being curable, such as thermosetting resin. Each plastic layer preferably comprises reinforcement elements, for example carbon/glass or aramid fibres, that extend substantially continuously in one direction in the plane of each layer. Different layers have fibres aligned in different directions. A complementary relationship between the radius of curvature of the outer flange surface (fixation flange) and the reduction of length in the main direction of the first elongated edge of the blank is used. By means of the rounded conical bulge, the web will bend.

Alternatively, the method comprises the further steps of cutting the second elongated edge with at least a cut providing a cutting end at a position corresponding with a second folding line of a second single curved flange forming surface and the web forming surface of the forming tool and forming an inner (free) flange of the blank by means of the second single curved flange forming surface of the forming tool.

In such way the inner flange (free flange) will become thicker than the outer flange, which is desirably since large bending loads are to be carried by the inner flange. The thicker inner flange is achieved by overlap joints between cut flaps formed by the cuts extending from the first edge (the inner flange edge) to a second folding line of (between) the web and the inner flange.

Preferably, the step of curing the completely formed blank is performed by sealing the blank in a vacuum bag, evacuating air from the vacuum bag, heating the blank by means of heating means, cooling the blank and stripping the finished stiffening element from the vacuum bag.

Thereby the stiffening element can be finished (exclusively for eventual fastening arrangement for attachment of the stiffening element to the single curved shell surface) in a short time and in a labour saving manner, directly in the forming tool.

Suitably, the method of curing the completely formed blank also comprises the step of compressing the blank in an autoclave.

In such way eventual air pockets between the layers can be minimized and limited to a certain predetermined extension.

Alternatively, the method of providing the blank of composite material is performed by an automatic tape laying machine (ATLM).

Thereby the manufacturing of stiffening elements of composite material can be cost-effective since the blank has a rectangular form. The manufacture is timesaving and the ATML-machine can be re-programmed for different types of blanks earmarked for a certain stiffening element dedicated for a certain aircraft type. Prepreg tapes including fibres that extend continuously within the tape are to be applied in the longitudinal direction of the blank. Perpendicular and diagonally to the longitudinal direction of the blank, sections of prepreg tape will be applied rapidly and accurately resulting in fibre orientation in a direction transverse and diagonally to the longitudinal direction of the blank. Other layers may have fibres aligned in different directions. These and other directions can be determined from the desired properties of the stiffening element and being programmed into the ATML-machine.

Suitably, the curved shell surface is a single curved shell surface.

Alternatively, the curved shell surface is a double curved shell surface.

This has also been solved by a stiffening element of composite material being defined in the introduction, the stiffening element being characterised by the features of the characterising part of claim 6.

In such way the stiffening element will have a considerable strength and at the same time a low weight, which is desirable for aircraft assemblies. The reinforcement fibres extend continuously unbroken in the direction of curvature for each layer. The fibres located in the web follow the bulge curvature of the web and the fibres located in the outer flange follow the curvature of the flange. Since all positions of the stiffening element can have fibres with optimized directions for strength reasons, the weight of the stiffening element can be minimized. Furthermore, the bulge curvature of the web stiffens the stiffening element, resulting in a strength improvement of the same without the need of any stiffening bars, or thicker material of the web etc.

Preferably is a free flange provided at the web for stiffening the element.

Suitably is the free flange concentric with the fixation flange.

Alternatively comprises the composite material comprises reinforcement elements following the curvature of the conical rounded bulge.

Thereby the strength of the stiffening element is increased, since large bending loads are to be carried by the inner flange.

The direction of the fibres in each layer may be the same. Each layer may also have fibres with several directions.

### BRIEF DESCRIPTION OF THE DRAWINGS

The present invention will now be described by way of example with reference to the accompanying schematic drawings of which:
FIG. 1 is a perspective view of a stiffening element according to a first embodiment of the present invention;
FIG. 2 is a perspective view of a stiffening element according to a second embodiment of the present invention;
FIG. 3 is a perspective view of a stiffening element according to a third embodiment of the present invention;
FIG. 4 is a blank of composite material properly cut for achieving the embodiment shown in FIG. 1;
FIGS. 5a-5b show an aircraft door including the embodiment shown in FIG. 1;
FIGS. 6-7 show different arrangements of stiffening elements shown in FIG. 1;
FIG. 8 is a forming tool for forming and curing a stiffening element;
FIGS. 9a-9b illustrate the stiffening element shown in FIG. 8; and
FIGS. 10a-10b illustrate a tape lying reel of an automatic tape laying machine.

### DETAILED DESCRIPTION OF THE PREFERRED EMBODIMENTS

Hereinafter, embodiments of the present invention will be described in detail with reference to the accompanying drawings related to embodiments, wherein for the sake of clarity and understanding of the invention some details of no importance are deleted from the drawings.

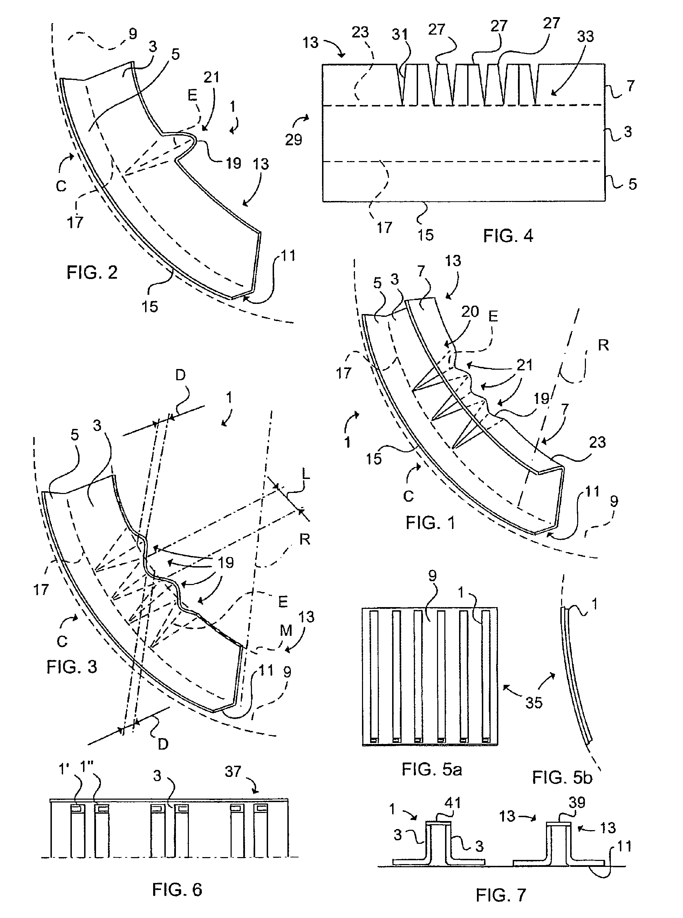

Referring to FIG. 1, a stiffening element 1 of composite material, such as thermosetting resin, comprises a web 3 and an outer 5 and inner 7 flange according to a first embodiment. The outer 5 flange (fixation flange) is provided for attachment to a single curved shell surface 9. The outer surface 11 of the outer flange 5 has a radius of curvature R corresponding with the radius of the single curved shell surface 9 curvature C. The inner flange 7 (free flange) includes a first elongated edge 13 which is shorter than a second elongated edge 15 of the outer flange 5. A first folding line 17 is formed between the outer flange 5 and the web 3. The web 3 comprises rounded conical bulges 19, each bulge 19 tapering from a base portion 21 of the bulge 19 essentially merging with a second folding line 23 of the inner flange 7 and the web 3. Each bulge 19 tapers in a direction towards the first folding line 17 and terminates with an apex 25 essentially merging with the first folding line 17. The bulge 19 has a cross-sectional area of the composite material, the cross-sectional area is perpendicular to the direction of the extension E of the bulge 19, decreasing linearly in a direction from the second folding line 23 towards the first folding line 17. The second folding line 23 and the inner flange 7 may also be defined as the first elongated edge 13.

The first elongated edge 13 forms the inner flange 7 and the second folding line 23. The second folding line 23 is essentially parallel (being concentric) with the first folding line 17. The inner (free) flange 7 includes overlapping flaps 27 (see FIG. 4) which has been cured together and also together with adjacent portions 20 of the inner flange 7, thereby building height of the inner flange. That is, the inner flange 7 has within the area of the bulges 19 (the base portions 21) a material thickness thicker than the thickness of the other portions of the material of the stiffening element 1. In such way the inner flange 7 will become thicker than the outer flange 5, which is desirable since large bending loads are to be carried by the inner flange 7. The composite material of the stiffening element 1 comprises reinforcement elements (not shown) of carbon following the curvature of the bulges 19. Reinforcement fibres oriented in the longitudinal direction follow the curvature of the stiffening element 1.

Referring to FIG. 2 a stiffening element 1 comprises a web 3 and an outer flange 5 according to a second embodiment. The outer flange 5 (fixation flange) is formed for suitably attachment to a double curved shell surface 9. Between the web 3 and the outer flange 5 is a first folding line 17 formed. A singular bulge 19 is formed in the web 3. The reduction of length of the first elongated edge 13 of the web 3 by means of the bulge 19 provides a bent outer flange 5, still maintaining the outer flange 5 with an even surface, which is desirably.

Referring to FIG. 3 a stiffening element 1 includes four bulges 19, two of which are defined as furrows and two are defined as ridges. Respective bulge 19 has an arcuate shape (wave shaped furrows and ridges) in cross section tapering towards the first folding line 17, A complementary relationship between the radius R of curvature of the outer flange surface 11 and a reduction of length in the main direction M (centre axis) of the first elongated edge 13 is used. By means of the conical formed furrows and ridges, the web 3 can be curved without any disruption of the reinforcement fibres. A relation, determined according to a calculation method by a computer (not shown), exists between the radius R of curvature of the outer side 11 of the outer flange 5 and the extent of depths D and lengths L of the bulges 19.

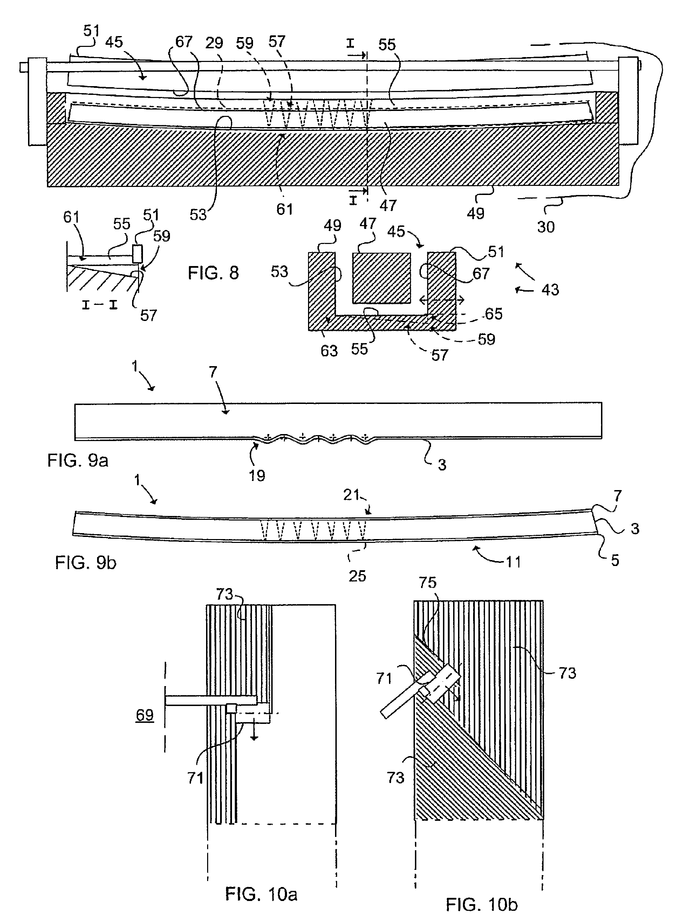

FIG. 4 illustrates schematically a blank 29 of composite material prior being applied onto a forming tool (see FIG. 8). Imaginary first 17 and second 23 junctions are referred with dotted lines. That is, along to these lines the blank 29 will be folded in the forming tool and formed into the preferred stiffening element 1. Prior to forming the blank 29 into the stiffening element 1, cuts 31 are cut in a direction, essentially perpendicular to the extension of the second elongated edge 15, to a cutting end 33 at a position corresponding with the second folding line 23 of the inner flange 7 and the web 3. The cuts 31 form flaps 27 used for building up and forming the inner flange 7.

FIGS. 5a and 5b illustrate schematically an aircraft door 35 including the embodiment shown in FIG. 1. To a door shell surface 9 are attached sex stiffening elements 1 by means of glue (may also be welded, riveted or screwed).

FIGS. 6 shows an arrangement of in pairs placed stiffening elements 1', 1''. The webs 3 of each pair are facing each other. Each pair constitutes an aircraft rib 37.

FIGS. 7 shows another arrangement wherein stiffening elements 2 of the second embodiment are placed in pairs with their webs 3 facing each other. Onto the first elongated edges 13 of the webs 3 a stiffening plate 39 of composite material is attached acting as a stiffening member 41.

Referring to FIG. 8 a forming tool 43 comprises a stiffening element forming surface 45. The forming tool 43 includes a male forming part 47 and a female forming part 49. The female forming part 49 includes an adjustable forming portion 51 adjustable for adjusting a predetermined distance between the flanges 5, 7 to be formed. The stiffening element forming surface 45 of the male forming part 47 and the female forming part 49 respectively comprises a first single curved flange forming surface 53 (forming the outer flange), the outer surface 11 of the outer flange 5 corresponding with the single curved shell surface 9 of an inner surface of an aircraft door shell. A web forming surface 55 comprises seven rounded bulge forming surfaces 57 tapering from a base portion surface 59 in a direction towards an apex point 61 of the forming surface 45 essentially merging with a first folding line 63 placed between the first single curved flange and web forming surfaces 53, 55. The base portion surface 59 is positioned at a second folding line 65 between the web forming surface 55 and a second single curved flange forming surface 67 (of the female adjustable forming portion 51 and of the male forming part 47 forming the inner flange 7). Adjacent the base portion surface 59, the second elongated edge 15 of the blank 29 is cut with a plurality of cuts 31 with cutting ends 33 at a position corresponding with the second folding line 65. Thereby is possibly to form the inner flange 7 of the blank 29 without any wrinkles by means of the second single curved flange forming surface 67 of the forming tool 43.

The rounded bulge forming surface 57 for forming conical rounded bulges 19, each bulge 19 has a cross-sectional area, perpendicular to the direction of the extension E of the bulge 19, decreasing linearly in a direction from the base portion surface 59, which merges with the second single curved flange forming surface 67 towards the first folding line 63.

Thereafter the formed blank 29 is cured for achieving the finished stiffening element 1. The procedure is as follows: The folded blank 29 is sealed in a vacuum bag 30. Thereafter air is evacuated from the vacuum bag 30. Thereafter the completely folded blank 29 is heated by means of heating means (not shown). Thereafter it is cooled and being removed from the vacuum bag 30. The stiffening element 1 is ready for attachment, after it has been removed from the forming tool 43, to the single curved shell surface 9.

The formed blank 29 may be cured in an autoclave (not shown) for compressing the formed blank 29 so that eventual air pockets between the plastic layers can be minimized and limited to a certain predetermined extension.

FIGS. 9a and 9b illustrate a stiffening element 1 formed by the forming tool 4.3 in FIG. 8. The outer flange 5 is not shown in FIG. 9a for sake of clarity. In FIGS. 10a-10b are shown two working stages of a method of providing the blank 29 of plastic layers by means of an automatic tape laying machine 69 ATML. In FIG. 10a is schematically shown a prepreg tape reel arrangement 71 being moved in a direction parallel with the extension of the essentially flat blank 29 and over the same. Reinforcement fibres 73 are schematically marked with lines. In FIG. 10b is schematically shown the prepreg tape reel arrangement 71 in another working position for laying prepreg tape 75 onto the first layer with a 45 degrees change. That is, the reinforcement fibres 75 of the now applied plastic layer will have a 45 degrees altered direction relatively the previous applied layer.

The blank 29 in FIG.8 includes 8 layers (not shown). The fibre orientation is 0, 90, +45, -45, -45, +45, 90 and 0 degrees. Other blanks may have up to 120 layers. The blank 29 comprises a first and a second elongated edge 13, 15. When manufacturing the stiffening element 1 following steps are performed; applying the blank 29 on the stiffening element forming surface 45 of the male forming part 47 of the forming tool 43, forming the blank 29 into the stiffening element 1, wherein the rounded bulge forming surface 57 forming a rounded conical bulge 19 decreasing linearly towards the outer flange 5. A relation exists between the radius of curvature of the outer surface 11 of the outer flange 5 and the reduction of length of the main direction M (centre axis) (see FIG. 3) of the first elongated edge 13 (a reduction of length of the inner flange 7). During the forming step the blank 29 will be pressed by the male forming part 47 towards the female forming part 49. Due to the above-mentioned reduction of length, achieved by the forming of the bulges 19 in the web 3, the outer flange 5 will curve. Guiding means (not shown) for guiding the blank 29 in a proper location at the forming surface/-s 45 of the forming tool 43 is arranged onto the same.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. The present invention can be employed for a single or a double curved shell surface.

The word folding in the present application can be replaced by the words bending, curving etc. Folds of the stiffening element are understood to be provided essentially rounded, also where the figures show sharp curves or sharp bends. The wording radius of curvature shall be interpreted as a curvature with one radius or a curvature with several different radii.

The invention is particularly, but not exclusively, applicable to larger aircraft such as passenger carrying aircraft or freight carrying aircraft.

## Claims

1. A method for manufacturing of a stiffening element of composite material, which stiffening element (1) is provided for attachment to a curved shell surface (9), said stiffening element (1) comprises a web (3) and at least one flange (5), the outer surface (11) of which has a radius of curvature (R) corresponding with said curved shell surface (9), the method includes the steps of:
- providing a substantial flat blank (29) of composite material comprising a first (13) and a second (15) essentially parallel elongated edge, forming the blank, and curing the formed blank (29), the method is **characterized in that** the forming step includes
- forming in said web (3) at least one rounded bulge (19) having a conical form tapering from said first edge (13) to a first folding line (17) for achieving said flange (5) and forming the flange (5) essentially merging with an apex of said rounded bulge (19).

2. A method according to claim 1, **wherein** the method comprises the further steps of:
- cutting said first elongated edge (13) with at least a cut (31) providing a cutting end (33) at a position corresponding with a second folding line (23); and
- forming an inner flange (7) of the blank (29) emanating from said second folding line (23).

3. A method according to claim 1 or 2, **wherein** the step of curing the formed blank (29) is performed by:
- sealing the folded blank (29) in a vacuum bag (30);
- evacuating air from said vacuum bag (30);
- heating the folded blank (29) by means of heating means;
- cooling the folded blank (29); and
- removing the finished stiffening element (1) from the vacuum bag (30).

4. A method according to any of claim 1- 3, **wherein** the method of curing the formed blank (29) comprises the step of:
- compressing the blank (29) in an autoclave.

5. A method according to any one of the preceding claims, **wherein** the method of providing the blank (29) of composite material is performed by an automatic tape laying machine (69).

6. A stiffening element of composite material, which stiffening element (1) is provided for attachment to a curved shell surface (9), said stiffening element (1) comprises a web (3) having a first elongated edge (13), and a fixation flange (5), which outer surface (11) has a radius of curvature (R) corresponding with said curved shell surface (9), **characterised in that** said web (3) comprises at least one conical rounded bulge (19) tapering from a base portion (21) essentially merging with said first elongated edge (13) to a first folding line (17) and said fixation flange (5).

7. A stiffening element according to claim 6, **wherein** an inner flange (7) is provided at said web (3) for stiffening the element (1).

8. A stiffening element according to claim 6 or 7, **wherein** said inner flange (7) is concentric with the fixation flange (5).

9. A stiffening element according to any of claims 6-8, **wherein** the composite material comprises reinforcement elements (73) following the curvature of the conical rounded bulge (19).

## Patentansprüche

1. Verfahren zur Herstellung eines Versteifungselements aus Verbundwerkstoff, welches Versteifungselement (1) zur Befestigung an einer gekrümmten Hüllenoberfläche (9) vorgesehen ist, wobei das Versteifungselement (1) einen Steg (3) und zumindest eine Wange (5) umfasst, dessen äußere Oberfläche (11) einen der gekrümmten Hüllenoberfläche (9) entsprechenden Krümmungsradius (R) aufweist, wobei das Verfahren die folgenden Schritte enthält:
Zur Verfügung Stellen eines im Wesentlichen flachen Rohlings (29) aus Verbundwerkstoff, der eine erste (13) und eine zweite (15) im Wesentlichen parallele Längskante aufweist,
Formen des Rohlings und Aushärten des geformten Rohlings (29), wobei das Verfahren **dadurch gekennzeichnet ist, dass** der Schritt des Formens enthält:
Formen zumindest einer abgerundeten Auswölbung (19) mit einer konischen Form in dem Steg (3), welche sich von der ersten Kante (13) zu einer ersten Faltlinie (17) hin verjüngt, um die Wange (5) zu erhalten, und Formen der Wange (5), die sich im Wesentlichen mit einem Scheitel der abgerundeten Auswölbung (19) vereinigt.

2. Verfahren nach Anspruch 1, wobei das Verfahren ferner die folgenden Schritte umfasst:
Schneiden der ersten Längskante (13) mit zumindest einem Schnitt (31), so dass ein Schnittende (33) an einer Position vorhanden ist, die einer zweiten Faltlinie (23) entspricht; und
Formen einer inneren Wange (7) des Rohlings (29), die aus der zweiten Faltlinie (23) hervorgeht.

3. Verfahren nach Anspruch 1 oder 2, wobei der Schritt des Aushärtens des geformten Rohlings (29) durchgeführt wird durch:
Abdichten des gefalteten Rohlings (29) in einem Vakuumsack (30);
Absaugen von Luft aus dem Vakuumsack (30);
Erhitzen des gefalteten Rohlings (29) mittels Heizmittel;
Kühlen des gefalteten Rohlings (29); und
Entfernen des fertigen Versteifungselements (1) aus dem Vakuumsack (30).

4. Verfahren nach einem der Ansprüche 1-3, wobei das Verfahren des Aushärtens des geformten Rohlings (29) den Schritt des
Zusammenpressens des Rohlings (29) in einem Autoklav umfasst.

5. Verfahren nach einem der vorstehenden Ansprüche, wobei das Verfahren des Zur Verfügung Stellens des Rohlings (29) aus Verbundwerkstoff von einer automatischen Bandschichtmaschine (69) durchgeführt wird.

6. Versteifungselement aus Verbundwerkstoff, welches Versteifungselement (1) zur Befestigung an einer gekrümmten Hüllenoberfläche (9) vorgesehen ist, wobei das Versteifungselement (1) einen Steg (3) mit einer ersten Längskante (13) und eine Befestigungswange (5) umfasst, dessen äußere Oberfläche (11) einen der gekrümmten Hüllenoberfläche (9) entsprechenden Krümmungsradius (R) aufweist, **dadurch gekennzeichnet, dass** der Steg (3) zumindest eine konische abgerundete Auswölbung (19) umfasst, die sich von einem Basisabschnitt (21) aus im Wesentlichen mit der ersten Längskante (13) vereinigt zu einer ersten Faltlinie (17) und der Befestigungswange (5) verjüngt.

7. Versteifungselement nach Anspruch 6, wobei eine innere Wange (7) an dem Steg (3) zum Versteifen des Elements (1) vorgesehen ist.

8. Versteifungselement nach Anspruch 6 oder 7, wobei die innere Wange (7) konzentrisch mit der Befestigungswange (5) ist.

9. Versteifungselement nach einem der Ansprüche 6 bis 8, wobei der Verbundwerkstoff Verstärkungselemente (73) umfasst, die der Krümmung der konischen abgerundeten Auswölbung (19) folgen.

## Revendications

1. Méthode de fabrication d'un élément raidisseur en matériau composite, lequel élément raidisseur (1) est prévu pour être fixé à une surface de coque incurvée (9), ledit élément raidisseur (1) comprenant une âme (3) et au moins un rebord (5), dont la surface externe (11) a un rayon de courbure (R) correspondant à ladite surface de coque incurvée (9), la méthode comprenant les étapes consistant à :
- fournir une ébauche sensiblement plate (29) en matériau composite comprenant un premier (13) et un second (15) bords allongés sensiblement parallèles, façonner l'ébauche, et durcir l'ébauche façonnée (29), la méthode étant **caractérisée en ce que** l'étape de façonnage consiste à
- façonner dans ladite âme (3) au moins un renflement arrondi (19) ayant une forme conique s'effilant à partir dudit premier bord (13) vers une première ligne de pliage (17) pour obtenir ledit rebord (5) et façonner le rebord (5) comme fusionnant essentiellement avec un sommet dudit renflement arrondi (19).

2. Méthode selon la revendication 1, dans laquelle la méthode comprend en outre les étapes consistant à :
- découper ledit premier bord allongé (13) avec au moins une découpe (31) présentant une extrémité de découpe (33) à une position correspondant à une seconde ligne de pliage (23) ; et
- façonner un rebord interne (7) de l'ébauche (29) émanant de ladite première ligne de pliage (23).

3. Méthode selon la revendication 1 ou 2, dans laquelle l'étape de durcissement de l'ébauche façonnée (29) est effectuée en :
- scellant l'ébauche pliée (29) dans un sac sous vide (30) ;
- en évacuant l'air dudit sac sous vide (30) ;
- en chauffant l'ébauche pliée (29) par le biais de moyens de chauffage ;
- en refroidissant l'ébauche pliée (29) ; et
- en retirant l'élément raidisseur fini (1) du sac sous vide (30).

4. Méthode selon l'une quelconque des revendications 1 à 3, dans laquelle la méthode de durcissement de l'ébauche façonnée (29) comprend les étapes consistant à :
- comprimer l'ébauche (29) dans un autoclave.

5. Méthode selon l'une quelconque des revendications précédentes, dans laquelle la méthode de fourniture de l'ébauche (29) en matériau composite est effectuée par une rubanneuse automatique (69).

6. Elément raidisseur en matériau composite, lequel élément raidisseur (1) est prévu pour être fixé à une surface de coque incurvée (9), ledit élément raidisseur (1) comprenant une âme (3) ayant un premier bord allongé (13) et un rebord de fixation (5), laquelle surface externe (11) a un rayon de courbure (R) correspondant à ladite surface de coque incurvée (9), **caractérisé en ce que** ladite âme (3) comprend au moins une bonne conique arrondie (19) s'effilant à partir d'une partie de base (21) fusionnant essentiellement avec ledit premier bord allongé (13) vers une première ligne de pliage (17) et ledit rebord de fixation (5).

7. Elément raidisseur selon la revendication 6, dans lequel un rebord interne (7) est prévu au niveau de ladite âme (3) pour raidir l'élément (1).

8. Elément raidisseur selon la revendication 6 ou 7, dans lequel ledit rebord interne (7) est concentrique avec le rebord de fixation (5).

9. Elément raidisseur selon l'une quelconque des revendications 6 à 8, dans lequel le matériau composite comprend des éléments de renforcement (73) suivant la courbure du renflement conique arrondi (19).
